# EUROPEAN PATENT SPECIFICATION

(11) **EP 2 661 108 B1**
(45) Date of publication and mention of the grant of the patent: **07.11.2018**
(21) Application number: 11854279.4
(22) Date of filing: 23.09.2011
(51) Int. Cl.: H04W 4/02, H04W 4/21, H04W 8/18

(54) **METHOD, TERMINAL AND SERVER FOR ADDING USER ASSOCIATION RELATIONSHIP**
VERFAHREN, ENDGERÄT UND SERVER ZUM HINZUFÜGEN VON ASSOZIATIONSVERHÄLTNISSEN
PROCÉDÉ, TERMINAL ET SERVEUR PERMETTANT D'AJOUTER UNE RELATION D'ASSOCIATION D'UTILISATEURS

(30) Priority: 27.12.2010 CN 201010607174
(43) Date of publication of application: 06.11.2013
(73) Proprietor: Tencent Technology (Shenzhen) Company Limited, Shenzhen, Guangdong 518044 (CN)
(72) Inventor: HU, Haibin, Guangdong 518044 (CN); YANG, Rongde, Guangdong 518044 (CN); ZHENG, Linzhou, Guangdong 518044 (CN); LIU, Dan, Guangdong 518044 (CN); LI, Xungeng, Guangdong 518044 (CN)
(74) Representative: Gunzelmann, Rainer
(86) International application number: PCT/CN2011/080100
(87) International publication number: WO 2012/088933

(56) References cited:
- EP-A2- 1 480 473
- WO-A2-2008/132241
- CN-A- 101 237 618
- CN-A- 101 409 730
- US-A1- 2010 057 858

## Description

### Field of the Invention

The present invention relates to radio communication network technologies, and more particularly, to a method, terminal and server for adding a user association relationship.

### Background of the Invention

At present, mobile terminals such as smart phones and panel computers have abundant functions, and various instant messaging software and social networking service software may be run in the mobile terminals. A user association relationship needs to be maintained when the software is run. For example, friend users need to be added into a user list when instant messaging software is run, or users following a microblog need to be added into the microblog.

At present, a condition may occur. For example, two peoples who just know are close together, e.g., the two peoples sit beside the same table in a coffee shop, have mobile terminals respectively, and want to add the other one in respective instant messaging clients or follow the other one in respective microblogs. For another example, when one people travels to a new place or arrives to a new place for other reasons, the people may want to communicate with a neighboring user using a client that runs in a mobile terminal or a non-mobile terminal, and thus a user association relationship needs to be added into the mobile terminal of the people. In the prior art, however, there is no service for adding a user association relationship such as a friend relationship or a following relationships into the mobile terminal based on the geographical locations of both sides.

WO 2008/132241 discloses a method through which contact is automatically established between users who come into proximity of one another. In the method, a device provides its seen log information to a server, along with its own UID, once the seen log information is received by the server, the server may store the information in a manner that is linked to the corresponding device's unique identifier (UID). By analyzing a given seen log, the server can associate two or more devices. The associated two devices may have come into proximity of one another. By analyzing the seen log, the server may also take into account information in regard to times, dates and/or location of events. Such information in a seen log may indicate that the two associated devices both came into the proximity of another device, perhaps within a certain time span in relation to one another or at a common or related location.

EP 1480473 A2 discloses tags for location based services in wireless network. The wireless network includes mobiles units, base stations and a platform. The platform includes a tag matching logic, which is operative for setting tags and matching tags of network users. The tags are associated with particular users. The tags may be matched based not only on tag content but also based on location information regarding the positions of the mobile units. The tag matching logic matches tags of different users based on certain tag matching rule. The tag matching rules includes content-based rules, proximity-based rules and time-based rules. The tag matching logic may match tags meeting a content-based rule, were the users are within a predefined proximity. The time-based rules may be used to account for the fact that the users are generally mobile, or the fact that the interests of users may change over time. Two users in the same proximity and with the same or complementary interests may be linked for communication to establish an acquaintance or to pursue a mutually desirable activity

### Summary of the Invention

Embodiments of the present invention provide a method according to claim 1 and a system according to claim 5 for adding a user association relationship, by which the user association relationship may be added into mobile terminals based on the geographical locations of both sides.

In order to implement the object of the present invention, the technical solution of the present invention includes the following.

A method for adding a user association relationship includes:
checking, by a first mobile terminal, whether an activating operation occurs in the first mobile terminal, and checking, by a second terminal, whether an activating operation occurs in the second terminal;
obtaining, by a client running in the first mobile terminal, current environment information and current user information of the first mobile terminal and sending the current environment information and the current user information of the first mobile terminal to the server, and obtaining, by a client running in the second terminal, current environment information and current user information of the second terminal and sending the current environment information and the current user information of the second terminal to the server;
receiving, by a server, the current environment information and the current user information of the first mobile terminal from the client running in the first mobile terminal, and receiving the current environment information and the current user information of the second terminal from the client running in the second terminal, wherein the current environment information of the first mobile terminal comprises geographical location information of the first mobile terminal and current time information of the first mobile terminal, wherein the current time information of the first mobile terminal is information of time at which the activating operation occurs in the first mobile terminal, and the current user information of the first mobile terminal comprises information of a user account for logging on the client running in the first mobile terminal; the current environment information of the second terminal comprises geographical location information of the second terminal and current time information of the second terminal, wherein the current time information of the second terminal is information of time at which the activating operation occurs in the second terminal, and the current user information of the second terminal comprises information of a user account for logging on the client running in the second terminal; and
determining, by the server, whether the current environment information of the first mobile terminal and the current environment information of the second terminal satisfy a predefined user association criterion, wherein the predefined user association criterion comprises that a time interval between time of occurring the activating operation in the first mobile terminal and time of occurring the activating operation in the second terminal is smaller than a predefined interval threshold; if the current environment information of the first mobile terminal and the current environment information of the second terminal satisfy the predefined user association criterion, adding a user association relationship for user accounts respectively corresponding to the first mobile terminal and the second terminal.

A terminal, in which a client is installed, includes:
an activating operation checking module, configured to check whether an activating operation occurs;
an information obtaining module, configured to, when the activating operation checking module detects the activating operation, obtain current environment information and current user information of the terminal, wherein the current environment information comprises geographical location information of the terminal and current time information of the terminal, wherein the current time information of the terminal is information of time at which the activating operation occurs in the terminal, and the current user information comprises information of a user account for logging on a client running in the terminal; and
an information sending module, configured to send the current environment information and the current user information to a server corresponding to the client, so that the server determines whether the current environment information of the terminal and current environment information of another terminal satisfy a predefined user association criterion, wherein the predefined user association criterion comprises that a time interval between time of occurring the activating operation in the terminal and time of occurring an activating operation in said another terminal is smaller than a predefined interval threshold.

A server includes:
an information receiving module, configured to receive current environment information and current user time information sent by at least one mobile terminal, wherein the current environment information comprises geographical location information of the mobile terminal and current time information of the mobile terminal, and the current user information comprises information of a user account for logging on a client running in the mobile terminal; characterized in that the current time information of the mobile terminal is information of time at which an activating operation occurs in the mobile terminal;
an information determining module, configured to determine whether the current environment information sent by the mobile terminal and current environment information sent by another terminal satisfy a predefined user association criterion, wherein the predefined user association criterion comprises that a time interval between time of occurring the activating operation in the mobile terminal and time of occurring an activating operation in said another terminal is smaller than a predefined interval threshold; and
an association relationship adding module, configured to, when the information determining module determines that the current environment information sent by the mobile terminal and the current environment information sent by another terminal satisfy the predefined user association criterion, add a user association relation for user accounts contained in the current user information of the two terminals.

It can be seen from the above technical solution that, in the embodiments of the present invention, the client of the terminal collects the information including the location information, the time information and the account information and sends the information to the server. The server establishes, according to the information, a user association relationship for user accounts corresponding to two or more near terminals, so as to implement the service for adding the user association relationship into the terminal based on the geographical locations of both sides, and facilitate user usage.

### Brief Description of Drawings

In order to make the technical solution of the present invention clearer, accompanying drawings to be used in the embodiments will be illustrated simply. Obviously, the accompanying drawings illustrated hereinafter are only some
embodiments of the present invention, and those skilled in the art can obtain other drawings according to these drawings without creative labor.
FIG. 1 is a flowchart illustrating a method for adding a user association relationship according to an embodiment of the present invention.
FIG. 2 is a flowchart illustrating a method for adding a user association relationship according to another embodiment of the present invention.
FIG. 3 is a schematic diagram illustrating an association relationship that is established for three or more user accounts according to an embodiment of the present invention.
FIG. 4 is a schematic diagram illustrating the structure of a terminal according to an embodiment of the present invention.
FIG. 5 is a schematic diagram illustrating the structure of a terminal according to another embodiment of the present invention.
FIG. 6 is a schematic diagram illustrating the structure of a server according to an embodiment of the present invention.
FIG. 7 is a schematic diagram illustrating the structure of a server according to another embodiment of the present invention.
FIG. 8 is a schematic diagram illustrating the structure of a network according to an embodiment of the present invention.

### Detailed Description of the Invention

In order to make the object, technical solution and merits of the present invention clearer, the technical solution of the embodiments of the present invention will be described clearly hereinafter with reference to the accompanying drawings. Obviously, the described embodiments are only partial embodiments of the present invention, but are not all embodiments. According to the embodiments of the present invention, those skilled in the art can obtain other embodiments without creative labor, which belong to the protection scope of the present invention.

In the embodiments of the present invention, a client of a terminal collects information including location information, time information and account information, and sends the information to a server. After receiving the information, the server establishes a user association relationship for user accounts corresponding to two or more mobile terminals or corresponding to a mobile terminal and a non-mobile terminal. Further, in another embodiment of the present invention, a simple action, i.e., an operation of activating the terminal such as rocking or clicking one key, is defined to trigger the client running in the terminal to collect the location information of the terminal, current time information and account information and send the information to the server. According to the information, the server establishes the user association relationship for two and more near mobile terminals in which activating operations occur at the same time. In this way, a process of adding the user association relationship is greatly simplified, and user experience is improved, which can increase the possibility of using instant messaging software and social networking service software by the user in the mobile terminal. Some embodiments will be described in detail hereinafter.

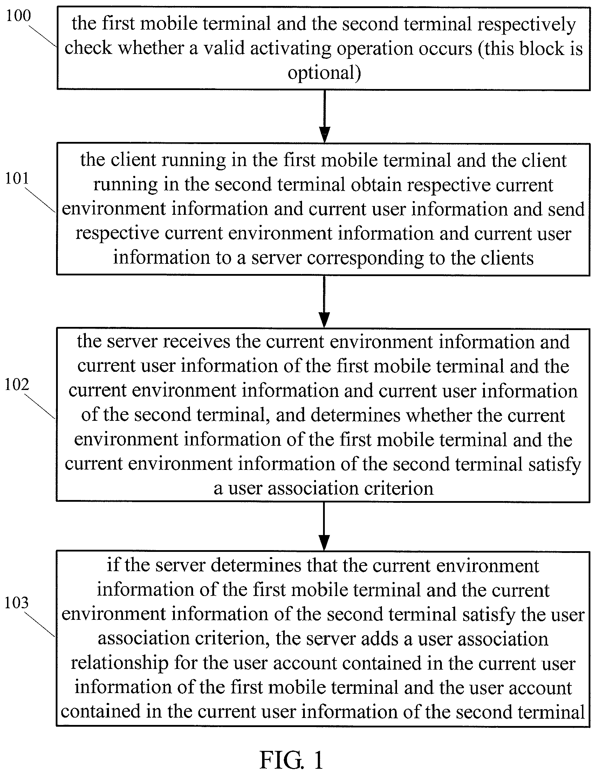

FIG. 1 is a flowchart illustrating a method for adding a user association relationship according to an embodiment of the present invention. In the embodiment, the user association relationship is to be added for two accounts, where one account is used for logging on a client of a first mobile terminal, and the other account is used for logging on a client of a second terminal. The first mobile terminal is a terminal that may be carried conveniently and has a radio communication function, such as a mobile phone, a Personal Digital Assistant (PDA), a notebook computer or a tablet computer. The second terminal may be a mobile terminal such as a mobile phone, a PDA or a notebook computer, and may also be a terminal that may not be carried conveniently, such as a desktop computer. The two clients usually have the same type e.g., the clients may be instant messaging clients or social networking service clients, and may also be clients which are logged through respective accounts and are operated according to respective user association relationships. The clients may be special application software loading in the terminal or the mobile terminal, and may also be flash clients loading on a browser of the terminal or mobile terminal, which will not be described in detail herein. The method includes following blocks.

In block 100, the first mobile terminal and the second terminal respectively check whether a valid activating operation occurs. This block is optional. The activating operation may be rocking or clicking one key. The activating operation may be an activating operation initiated initiatively and detected by the mobile terminal or the terminal as described above, and may also be a conventional operation. For example, it may be determined, based on a Global Positioning System (GPS) of the mobile terminal, whether the activating operation occurs.

Moreover, the valid activating operations of the two terminals may belong to different types or the same type.

In block 101, the client running in the first mobile terminal and the client running in the second terminal obtain respective current environment information and current user information and send respective current environment information and current user information to a server corresponding to the clients. The current environment information of the first mobile terminal includes geographical location information of the first mobile terminal and current time information, and the current user information of the first mobile terminal includes information of a user account for logging on the client running in the first mobile terminal. The current environment information of the second terminal includes geographical location information of the second terminal and current time information, and the current user information of the second terminal includes information of a user account for logging on the client running in the second terminal.

If block 100 is performed, it may be set that the client running in the first mobile terminal/second terminal obtains the current environment information and the current user information only if the first mobile terminal/second terminal detects a valid activating operation, and sends the current environment information and the current user information to the server corresponding to the client.

Of cause, another condition may be set as a condition of obtaining and sending the current environment information and the current user information. For example, the current environment information and the current user information are sent to the server according to a period predefined or defined by a user, i.e., sent to the server in a heartbeat packet manner. For another example, the current environment information and the current user information are sent to the server when the user performs a GPS operation.

The information of geographical location may be GPS information, or may also be index information. After receiving the index information, the server may determine the detailed location where the first mobile terminal/second terminal is located in a period of time corresponding to the index information. The first mobile terminal/second terminal usually first bundles the current environment information and the current user information and then sends the information, and thus the server may perform user association processing for the bundled current user information after determining the current environment information.

In block 102, the server receives the current environment information and current user information of the first mobile terminal and the current environment information and current user information of the second terminal, and determines whether the current environment information of the first mobile terminal and the current environment information of the second terminal satisfy a user association criterion. For example, the user association criterion includes determining whether a distance between the geographical location of the first mobile terminal and the geographical location of the second terminal is smaller than a predefined location threshold, and/or determining whether a time interval between an activating operation occurred in the first mobile terminal and an activating operation occurred in the second terminal is smaller than a predefined interval threshold. If two terminals are both mobile terminals, it is usually required that the distance between the geographical locations of the two terminals is smaller than the predefined location threshold and the time interval between the activating operations occurred respectively in the two terminals is smaller than the predefined interval threshold. If one of the two terminals is a mobile terminal, and the other is a non-mobile terminal, it is only required that the distance between the geographical locations of the two terminals is smaller than the predefined location threshold. The user association criterion may be determined according to practical application requirements, which will not be described in detail herein.

In practical applications, the server may receive a large amount of information sent by mobile terminals. In order to increase processing speed, when receiving new data, the server may only search stored data of the same kind as the received new data, where the time interval between the time of receiving the searched data and the time of receiving the new data is within a predefined time range, e.g., 10s. The server compares GPS information contained in the two pieces of data. If it is determined, according to the GPS information, that the distance between two mobile terminals respectively sending the two pieces of data is very near, it is determined that a user association relationship such as a following relationship needs to be established between the two mobile terminals. The server sends an account and relationship server information of two accounts for respectively logging on the clients of the two mobile terminals to add the following relationship for the two accounts.

In block 103, if the server determines that the current environment information of the first mobile terminal and the current environment information of the second terminal satisfy the user association criterion, the server adds a user association relationship for the user account contained in the current user information of the first mobile terminal and the user account contained in the current user information of the second terminal. When a user logs on the client running in the first mobile terminal with the user account contained in the current user information of the first mobile terminal, the client running in the first mobile terminal displays the added user association relationship. Similarly, when a user logs on the client running in the second terminal with the user account contained in the current user information of the second terminal, the client running in the second terminal displays the added user association relationship.

In this block, when the client running in the first mobile terminal or the client running in the second terminal is to display the added user association relationship, the client obtains the user association relationship from the server.

It should be noted that, the user association relationship may be added temporarily or permanently. The temporary user association relationship means that, after the user leaves the current location, or a period of time passes, or the user quits from the client, the server does not save the user association relationship any more. The permanent user association relationship means that, after the user association relationship is added, the server does not delete the user association relationship unless the user deletes the user association relation initiatively. Moreover, it may be predefined, or determined according to a certain condition, or defined by the user whether the user association relationship is added temporarily or permanently.

The embodiment of the present invention will be described with reference to some actual examples. If the user wants to learn restaurants within 500 meters away from the user, the user opens a certain social networking service client running in the carried mobile terminal such as a mobile phone, a panel computer or a PDA. The client such as a microblog client searches restaurant information by a searching function in the client, and is triggered by the searching condition to send relative information to the server. The server may establish a following relationship between the user and restaurant users logging on the same social networking service client within 500 meters away from the user, where it is assumed that the restaurant users respectively use the client and introduce respective location, menus, prices etc through microblog. Thus, the user may learn the conditions of these restaurants, and perform dinner booking or seat reservation. Moreover, the user may configure the user association relationship added in this condition as a temporary user association relationship. After the user leaves the current location, or a period of time passes or the user quits from the client, the server deletes the user association relationship. In this way, it may be avoided that unnecessary user association relationships are saved for a long time. Of cause, if the user considers a certain restaurant good and may select the restaurant later, the user association relationship may be configured as a permanent user association relationship. Thus, the user may learn the conditions of the restaurant at any time without going to this place.

Moreover, when two friends meet, any one of them may conveniently add the other one as a friend by rocking his mobile terminal in which a client is running. The detailed examples of this condition may refer to subsequent description.

In a detailed example, if in a network there is an account and relationship server for storing account information and user association relationships, the server for processing data may send the user information to the account and relationship server when determining to establish a user association relationship for the user accounts.

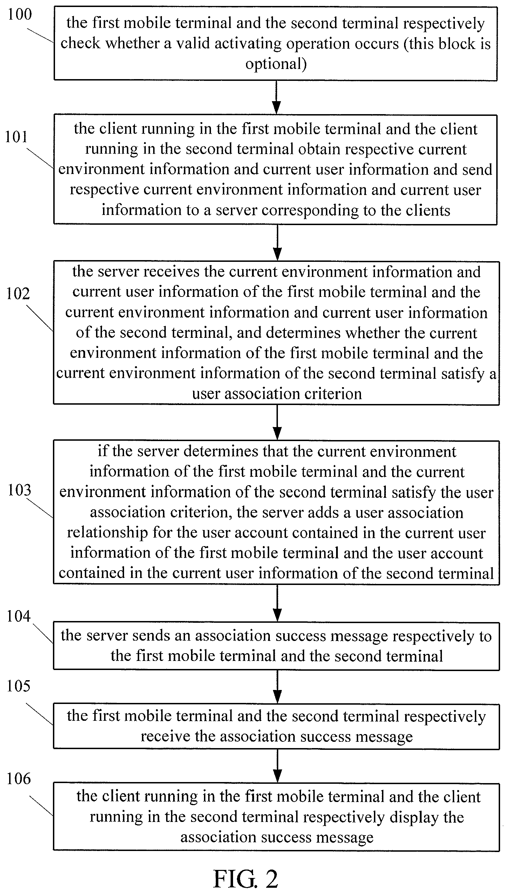

As shown in FIG. 2, the method may further include blocks 104, 105 and 106 after block 103.

In block 104, the server sends an association success message respectively to the first mobile terminal and the second terminal.

In block 105, the first mobile terminal and the second terminal respectively receive the association success message.

In block 106, the client running in the first mobile terminal and the client running in the second terminal respectively display the association success message.

The above blocks are a process after the user association relationship is established successfully. If the user association relationship can not be established successfully, the server may send an association failure message respectively to the first mobile terminal and the second terminal. The first mobile terminal and the second terminal respectively display a failure prompt. Or, if the association failure message contains a failure reason, the first mobile terminal and the second terminal may further display a prompt, so that the user association relationship can be established successfully after the user of the first mobile terminal and the user of the second terminal perform adjustment.

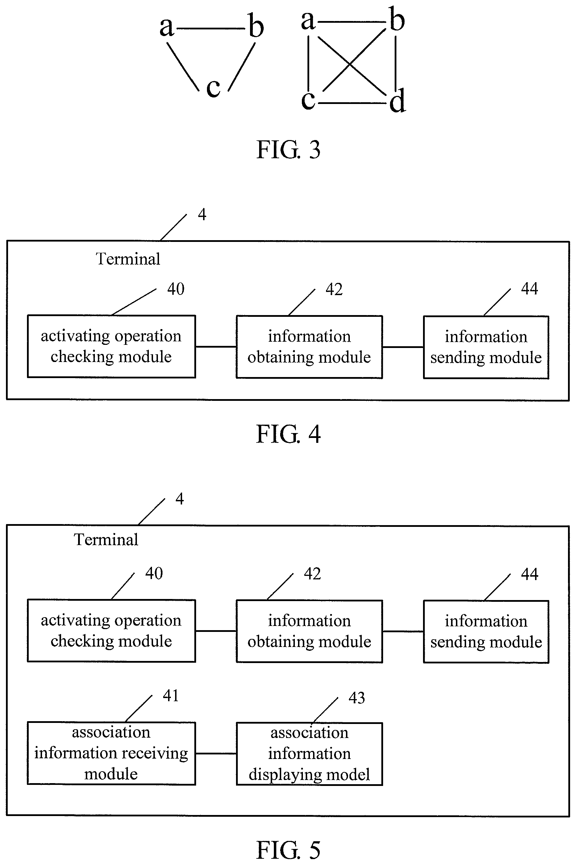

In the above embodiments, the server establishes the user association relationship only for two user accounts. The server may also establish the association relationship for multiple user accounts. For the client side, the process is the same as that mentioned in the above embodiments. But, the server needs to add logic of establishing the user association relation for multiple user accounts. For example, when receiving information of three or more user accounts of which time information and location information both satisfy the user association criterion, the server establishes the user association relationship for the multiple user accounts, as shown in FIG. 3. In FIG. 3, a, b, c and d respectively represent different user accounts, lines among a, b, c and d represent user association relationships for different users. According to practical requirements, fully-connected association logic or partly-connected association logic may be defined.

Accordingly, embodiments of the present invention provide schematic diagrams illustrating the structure of a terminal and the structure of a server, which will be described respectively hereinafter. FIG. 4 is a schematic diagram illustrating the structure of a terminal. The terminal may be a mobile terminal or a terminal of
another type as long as the terminal can run a following client and communicate with the server. A terminal 4 includes following modules.

An activating operation checking module 40 is configured to check whether a valid activating operation occurs in the terminal. This module is optional. FIG.4 shows the terminal including this module, a terminal not including this module is not shown.

An information obtaining module 42 is configured to obtain current environment information and current user information of the terminal, where the current environment information includes geographical location information of the terminal and current time information, and the current user information includes information of a user account for logging on a client running in the terminal. If the terminal includes the activating operation checking module 40, the information obtaining module 42 obtains the current environment information and current user information of the terminal when the activating operation checking module 40 detects an activating operation.

Herein, the client may be an instant messaging client or a social networking service client, and may also be a client which is logged through an account and is operated according to a user association relationship.

An information sending module 44 is configured to send the current environment information and the current user information to a server corresponding to the client, so that the server establishes a user association relationship for the user account and another user account according to the current environment information and the current user information.

As shown in FIG. 5, the terminal 4 may further include:
an association information receiving module 41, configured to receiving an association success message from the server, where the association success message is used for prompting that the user association relationship is established successfully for the user account and another user account; and
an association information displaying module 43, configured to display the association success message in the client.

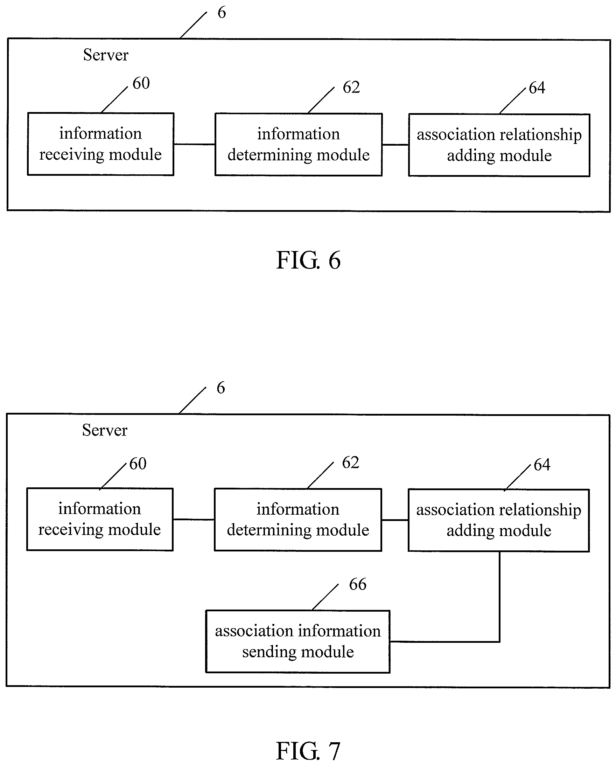

Correspondingly, FIG. 6 is a schematic diagram illustrating the structure of a server. A server 6 includes the following modules.

An information receiving module 60 is configured to receive current environment information and current user time information sent by at least one mobile terminal, where the current environment information includes geographical location information of the mobile terminal and current time information, and the current user information includes information of a user account for logging in a client running in the mobile terminal. Herein, the client may be an instant messaging client or a social networking service client, and may also be a client which is logged through an account and is operated according to a user association relationship.

An information determining module 62 is configured to determine whether the current environment information sent by the mobile terminal and current environment information sent by another terminal satisfy a user association criterion.

An association relationship adding module 64 is configured to, when the information determining module 62 determines that the current environment information sent by the mobile terminal and the current environment information sent by another terminal satisfy the user association criterion, add a user association relationship for user accounts contained in the current user information of the two terminals. Thus, when a user logs on the client running in the mobile terminal through the user account, the added user association relation is displayed in the client.

As shown in FIG. 7, the server 6 may further include:
an association information sending module 66, configured to send an association success message respectively to the two terminals.

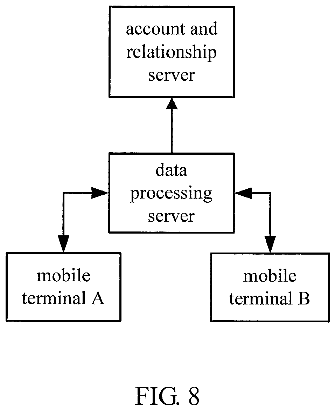

FIG. 8 is a schematic diagram illustrating the structure of a network. The network includes a mobile terminal A, a mobile terminal B, a data processing server and an account and relationship server. The data processing server processes data, and the account and relationship server stores account information. Hereinafter, a process of establishing a following relationship for a microblog account is taken as an example to describe a processing process.

When the client of the mobile terminal A runs in the mobile terminal A and the client of the mobile terminal B runs in the mobile terminal B, the clients of the two mobile terminals collect respective current GPS information and time information through respectively performing an activating operation such as rocking in the mobile terminal A and the mobile terminal B at the same time, then store the information together with the account information bundled with respective client and send the stored information to the data processing server.

After receiving the data, the data processing server stores the received data chronologically. When receiving new data, the data processing server searches the stored data, where the time interval between the time of receiving the searched data and the time of receiving the new data is smaller than 10s. The data processing server compares GPS information contained in the two pieces of data. If it is determined, according to the GPS information, that the distance between two mobile terminals respectively sending the two pieces of data is very near, it is determined that the two mobile terminals need to follow to each other. The data processing server sends the account and relationship server information of two accounts for respectively logging on the clients of the two mobile terminals to add the following relationship for the two accounts. In the embodiment, the data processing server receives the data sent by the mobile terminal A firstly, and after 2s, receives the data sent by the mobile terminal B. After receiving the data sent by the mobile terminal B, the data processing server searches data received within 10s, i.e., data including the data sent by the mobile terminal A and the data sent by the mobile terminal B. Further, the data processing server compares the GPS information contained in the data. If the distance between the mobile terminal A and the mobile terminal B satisfies a predefined threshold, the data processing server sends the account and relationship server the information of two accounts respectively contained in the data sent by the mobile terminal A and the mobile terminal B.

According to a result of adding the following relationship, the data processing server sends a message indicating whether the following relationship is added successfully to the mobile terminal A and the mobile terminal B. If the following relationship is added successfully, a following success prompt is displayed in the mobile terminal A and the mobile terminal B at the same time. If the following relationship is not added successfully, a following failure prompt is displayed in the mobile terminal A and the mobile terminal B at the same time.

In the embodiments of the present invention, the client collects the information including the location information, the time information and the account information and sends the information to the server. The server establishes, according to the information, the user association relationship for user accounts corresponding to two or more near terminals, so as to implement the service for adding a user association relationship such as a friend relationship or a following relationship based to the geographical locations of both sides, and facilitate user usage. In addition, the user association relationship may be added by defining the simple activating operation. In this way, the conventional process of adding the user association relationship is greatly simplified, and user experience is improved, which can increase the possibility of using instant messaging software and social networking service software by the user in the mobile terminal.

Those skilled in the art can understand that all or part of processes in the method provided by the embodiments of the present invention can be implemented by instructing related hardware by a program, the program may be stored in a readable memory of a computer, and above method steps are included when the program is operated. The memory includes a diskette, a Compact Disc (CD), a Read-Only Memory (ROM), a Random Access Memory (RAM) and so on.

The foregoing is only preferred embodiments of the present invention and is not used to limit the protection scope of the present invention. Any modification, equivalent substitution and improvement without departing from the principle of the present invention are within the protection scope of the present invention.

## Claims

1. A method for adding a user association relationship, wherein the method comprises:
checking (100), by a first mobile terminal, whether an activating operation occurs in the first mobile terminal, and checking (100), by a second terminal, whether an activating operation occurs in the second terminal;
obtaining (101), by a client running in the first mobile terminal, current environment information and current user information of the first mobile terminal and sending the current environment information and the current user information of the first mobile terminal to the server, and obtaining (101), by a client running in the second terminal, current environment information and current user information of the second terminal and sending the current environment information and the current user information of the second terminal to the server;
receiving (102), by a server, the current environment information and the current user information of the first mobile terminal from the client running in the first mobile terminal, and receiving (102) the current environment information and the current user information of the second terminal from the client running in the second terminal, wherein the current environment information of the first mobile terminal comprises geographical location information of the first mobile terminal and current time information of the first mobile terminal, wherein the current time information of the first mobile terminal is information of time at which the activating operation occurs in the first mobile terminal, and the current user information of the first mobile terminal comprises information of a user account for logging on the client running in the first mobile terminal; the current environment information of the second terminal comprises geographical location information of the second terminal and current time information of the second terminal, wherein the current time information of the second terminal is information of time at which the activating operation occurs in the second terminal, and the current user information of the second terminal comprises information of a user account for logging on the client running in the second terminal; and
determining (102), by the server, whether the current environment information of the first mobile terminal and the current environment information of the second terminal satisfy a predefined user association criterion, wherein the predefined user association criterion comprises that a time interval between time of occurring the activating operation in the first mobile terminal and time of occurring the activating operation in the second terminal is smaller than a predefined interval threshold; if the current environment information of the first mobile terminal and the current environment information of the second terminal satisfy the predefined user association criterion, adding (103) a user association relationship for user accounts respectively corresponding to the first mobile terminal and the second terminal.

2. The method according to claim 1, after the server adds the user association relationship for the user accounts corresponding to the first mobile terminal and the second terminal, further comprising:
sending (104), by the server, an association success message respectively to the first mobile terminal and the second terminal;
receiving (105), by the first mobile terminal and the second terminal, the association success message respectively; and
displaying (106), by the clients running in the first mobile terminal and the second terminal, the association success message respectively.

3. The method according to claim 1, the predefined user association criterion further comprises that a distance between geographical locations of the first mobile terminal and the second terminal is smaller than a predefined location threshold.

4. The method according to claim 1, wherein the client is an instant messaging client or a social networking service client.

5. A system for adding a user association relationship, comprising a terminal (4), in which a client is installed, and a server (6), wherein the terminal comprises:
an activating operation checking module (40), configured to check whether an activating operation occurs;
an information obtaining module (42), configured to, when the activating operation checking module (40) detects the activating operation, obtain current environment information and current user information of the terminal, wherein the current environment information comprises geographical location information of the terminal and current time information of the terminal, wherein the current time information of the terminal is information of time at which the activating operation occurs in the terminal, and the current user information comprises information of a user account for logging on the client running in the terminal; and
an information sending module (44), configured to send the current environment information and the current user information to the server;
the server comprises:
an information receiving module (60), configured to receive the current environment information and the current user time information of the terminal and receive current environment information and current user information of another terminal;
an information determining module (62), determines whether the current environment information of the terminal and the current environment information of said another terminal satisfy a predefined user association criterion, wherein the predefined user association criterion comprises that a time interval between time of occurring the activating operation in the terminal and time of occurring an activating operation in said another terminal is smaller than a predefined interval threshold;
an association relationship adding module (64), configured to, when the information determining module (62) determines that the current environment information of the terminal and the current environment information of said another terminal satisfy the predefined user association criterion, add a user association relation for user accounts contained in the current user information of the two terminals.

6. The system according to claim 5, wherein the terminal further comprises:
an association information receiving module (41), configured to receive an association success message sent by the server; and
an association information displaying module (43), configured to display the association success message in the client.

7. The system according to claim 5 or 6, wherein the client is an instant messaging client or a social networking service client.

8. The system according to claim 5, wherein the server further comprises:
an association information sending module (66), configured to send an association success message to the mobile terminal.

9. The system according to claim 5 or 8, wherein the server is an instant messaging server serving an instant messaging client or a social networking service server serving a social networking service client.

## Patentansprüche

1. Verfahren zum Hinzufügen einer Benutzerassoziationsbeziehung, wobei das Verfahren umfasst:
Prüfen (100) durch ein erstes mobiles Endgerät, ob ein Aktivierungsvorgang im ersten mobilen Endgerät erfolgt, und Prüfen (100) durch ein zweites Endgerät, ob ein Aktivierungsvorgang im zweiten Endgerät erfolgt;
Erhalten (101) einer aktuellen Umgebungsinformation und einer aktuellen Benutzerinformation des ersten mobilen Endgeräts durch einen Client, der auf dem ersten mobilen Endgerät ausgeführt wird, und Senden der aktuellen Umgebungsinformation und der aktuellen Benutzerinformation des ersten mobilen Endgeräts an den Server und Erhalten (101) einer aktuellen Umgebungsinformation und einer aktuellen Benutzerinformation des zweiten Endgeräts durch einen Client, der auf dem zweiten Endgerät ausgeführt wird, und Senden der aktuellen Umgebungsinformation und der aktuellen Benutzerinformation des zweiten Endgeräts an den Server;
Empfangen (102) der aktuellen Umgebungsinformation und der aktuellen Benutzerinformation des ersten mobilen Endgeräts vom Client, der auf dem ersten mobilen Endgerät ausgeführt wird, durch einen Server und Empfangen (102) der aktuellen Umgebungsinformation und der aktuellen Benutzerinformation des zweiten Endgeräts vom Client, der auf dem zweiten Endgerät ausgeführt wird, wobei die aktuelle Umgebungsinformation des ersten mobilen Endgeräts geographische Standortinformation des ersten mobilen Endgeräts und aktuelle Zeitinformation des ersten mobilen Endgeräts umfasst, wobei die aktuelle Zeitinformation des ersten mobilen Endgeräts Information zu einer Zeit ist, zu der der Aktivierungsvorgang auf dem ersten mobilen Endgerät erfolgt, und die aktuelle Benutzerinformation des ersten mobilen Endgeräts Information zu einem Benutzerkonto zum Anmelden am Client, der auf dem ersten mobilen Endgerät ausgeführt wird, umfasst; wobei die aktuelle Umgebungsinformation des zweiten Endgeräts geographische Standortinformation des zweiten Endgeräts und aktuelle Zeitinformation des zweiten Endgeräts umfasst, wobei die aktuelle Zeitinformation des zweiten Endgeräts Information zu einer Zeit ist, zu der der Aktivierungsvorgang auf dem zweiten Endgerät erfolgt, und die aktuelle Benutzerinformation des zweiten Endgeräts Information zu einem Benutzerkonto zum Anmelden am Client, der auf dem zweiten Endgerät ausgeführt wird, umfasst; und
Bestimmen (102) durch den Server, ob die aktuelle Umgebungsinformation des ersten mobilen Endgeräts und die aktuelle Umgebungsinformation des zweiten Endgeräts ein vordefiniertes Benutzerassoziationskriterium erfüllen, wobei das vordefinierte Benutzerassoziationskriterium umfasst, dass ein Zeitintervall zwischen einer Zeit, zu der der Aktivierungsvorgang auf dem ersten mobilen Endgerät erfolgt, und einer Zeit, zu der der Aktivierungsvorgang auf dem zweiten Endgerät erfolgt, kleiner als ein vordefinierter Intervallschwellenwert ist; wenn die aktuelle Umgebungsinformation des ersten mobilen Endgeräts und die aktuelle Umgebungsinformation des zweiten Endgeräts das vordefinierte Benutzerassoziationskriterium erfüllen, Hinzufügen (103) einer Benutzerassoziationsbeziehung für Benutzerkonten, die jeweils dem ersten mobilen Endgerät und dem zweiten Endgerät entsprechen.

2. Verfahren nach Anspruch 1, das, nachdem der
Server die Benutzerassoziationsbeziehung für die Benutzerkonten hinzugefügt hat, die dem ersten mobilen Endgerät und dem zweiten Endgerät entsprechen, ferner umfasst:
Senden (104) einer Assoziation-erfolgreich-Nachricht durch den Server an das erste mobile Endgerät bzw. das zweite Endgerät;
Empfangen (105) der Assoziation-erfolgreich-Nachricht durch das erste mobile Endgerät bzw. das zweite Endgerät; und
Anzeigen (106) der Assoziation-erfolgreich-Nachricht durch die Clients, die am ersten mobilen Endgerät bzw. am zweiten Endgerät ausgeführt werden.

3. Verfahren nach Anspruch 1, wobei das vordefinierte Benutzerassoziationskriterium ferner umfasst, dass eine Distanz zwischen geographischen Standorten des ersten mobilen Endgeräts und des zweiten Endgeräts kleiner als ein vordefinierter Standortschwellenwert ist.

4. Verfahren nach Anspruch 1, wobei der Client ein Instant-Messaging-Client oder ein Social-Networking-Dienst-Client ist.

5. System zum Hinzufügen einer Benutzerassoziationsbeziehung, das ein Endgerät (4), auf dem ein Client installiert ist, und einen Server (6) umfasst, wobei das Endgerät umfasst:
ein Aktivierungsvorgangprüfmodul (40), das so konfiguriert ist, dass es prüft, ob ein Aktivierungsvorgang erfolgt;
ein Informationserhaltungsmodul (42), das so konfiguriert ist, dass es, wenn das Aktivierungsvorgangprüfmodul (40) den Aktivierungsvorgang erkennt, aktuelle Umgebungsinformation und aktuelle Benutzerinformation des Endgeräts erhält, wobei die aktuelle Umgebungsinformation geographische Standortinformation des Endgeräts und aktuelle Zeitinformation des Endgeräts umfasst, wobei die aktuelle Zeitinformation des Endgeräts Information zu einer Zeit ist, zu der der Aktivierungsvorgang am Endgerät erfolgt, und die aktuelle Benutzerinformation Information zu einem Benutzerkonto zum Anmelden am Client, der auf dem Endgerät ausgeführt wird, umfasst; und
ein Informationssendemodul (44), das so konfiguriert ist, dass es die aktuelle Umgebungsinformation und die aktuelle Benutzerzeitinformation an den Server sendet;
wobei der Server umfasst:
ein Informationsempfangsmodul (60), das so konfiguriert ist, dass es die aktuelle Umgebungsinformation und die aktuelle Benutzerzeitinformation des Endgeräts empfängt und aktuelle Umgebungsinformation und aktuelle Benutzerinformation eines anderen Endgeräts empfängt;
ein Informationsbestimmungsmodul (62), das bestimmt, ob die aktuelle Umgebungsinformation des Endgeräts und die aktuelle Umgebungsinformation des anderen Endgeräts ein vordefiniertes Benutzerassoziationskriterium erfüllen, wobei das vordefinierte Benutzerassoziationskriterium umfasst, dass ein Zeitintervall zwischen einer Zeit, zu der der Aktivierungsvorgang auf dem Endgerät erfolgt, und einer Zeit, zu der ein Aktivierungsvorgang auf dem anderen Endgerät erfolgt, kleiner als ein vordefinierter Intervallschwellenwert ist;
ein Assoziationsbeziehungshinzufügungsmodul (64), das so konfiguriert ist, dass es, wenn das Informationsbestimmungsmodul (62) bestimmt, dass die aktuelle Umgebungsinformation des Endgeräts und die aktuelle Umgebungsinformation des anderen Endgeräts das vordefinierte Benutzerassoziationskriterium erfüllen, eine Benutzerassoziationsbeziehung für Benutzerkonten hinzufügt, wie in der aktuellen Benutzerinformation der zwei Endgeräte enthalten.

6. System nach Anspruch 5, wobei das Endgerät ferner umfasst:
ein Assoziationsinformationsempfangsmodul (41), das so konfiguriert ist, dass es eine vom Server gesendete Assoziation-erfolgreich-Nachricht empfängt; und
ein Assoziationsinformationsanzeigemodul (43), das so konfiguriert ist, dass es die Assoziation-erfolgreich-Nachricht am Client anzeigt.

7. System nach Anspruch 5 oder 6, wobei der Client ein Instant-Messaging-Client oder ein Social-Networking-Dienst-Client ist.

8. System nach Anspruch 5, wobei der Server ferner umfasst:
ein Assoziationsinformationssendemodul (66), das so konfiguriert ist, dass es eine Assoziation-erfolgreich-Nachricht an das mobile Endgerät sendet.

9. System nach Anspruch 5 oder 8, wobei der Server ein Instant-Messaging-Server, der einen Instant-Messaging-Client betreut, oder ein Social-Networking-Dienst-Server, der einen Social-Networking-Dienst-Client betreut, ist.

## Revendications

1. Procédé pour ajouter une relation d'association d'utilisateurs, le procédé comprenant :
vérifier (100), par un premier terminal mobile, si une opération d'activation se produit ou non dans le premier terminal mobile, et vérifier (100), par un second terminal, si une opération d'activation se produit ou non dans le second terminal ;
obtenir (101), par un client s'exécutant dans le premier terminal mobile, des informations d'environnement courant et des informations d'utilisateur courant du premier terminal mobile et envoyer les informations d'environnement courant et les informations d'utilisateur courant du premier terminal mobile au serveur, et obtenir (101), par un client s'exécutant dans le second terminal, des informations d'environnement courant et des informations d'utilisateur courant du second terminal et envoyer les informations d'environnement courant et les informations d'utilisateur courant du second terminal au serveur ;
recevoir (102), par un serveur, les informations d'environnement courant et les informations d'utilisateur courant du premier terminal mobile à partir du client s'exécutant dans le premier terminal mobile, et recevoir (102) les informations d'environnement courant et les informations d'utilisateur courant du second terminal à partir du client s'exécutant dans le second terminal, les informations d'environnement courant du premier terminal mobile comprenant des informations de localisation géographique du premier terminal mobile et des informations d'instant courant du premier terminal mobile, les informations d'instant courant du premier terminal mobile étant des informations d'instant auquel l'opération d'activation se produit dans le premier terminal mobile, et les informations d'utilisateur courant du premier terminal mobile comprenant des informations d'un compte d'utilisateur pour se connecter sur le client s'exécutant dans le premier terminal mobile ; les informations d'environnement courant du second terminal comprenant des informations de localisation géographique du second terminal et des informations d'instant courant du second terminal, les informations d'instant courant du second terminal étant des informations d'instant auquel l'opération d'activation se produit dans le second terminal, et les informations d'utilisateur courant du second terminal comprenant des informations d'un compte d'utilisateur pour se connecter sur le client s'exécutant dans le second terminal ; et
déterminer (102), par le serveur, si les informations d'environnement courant du premier terminal mobile et les informations d'environnement courant du second terminal satisfont ou non un critère d'association d'utilisateurs prédéfini, le critère d'association d'utilisateurs prédéfini comprenant le fait qu'un intervalle de temps entre l'instant où se produit l'opération d'activation dans le premier terminal mobile et l'instant où se produit l'opération d'activation dans le second terminal est inférieur à un seuil d'intervalle prédéfini ; si les informations d'environnement courant du premier terminal mobile et les informations d'environnement courant du second terminal satisfont le critère d'association d'utilisateurs prédéfini, ajouter (103) une relation d'association d'utilisateurs pour des comptes d'utilisateur correspondant respectivement au premier terminal mobile et au second terminal.

2. Procédé selon la revendication 1, comprenant en outre, après que le serveur ajoute la relation d'association d'utilisateurs pour les comptes d'utilisateur correspondant au premier terminal mobile et au second terminal :
envoyer (104), par le serveur, un message de réussite d'association respectivement au premier terminal mobile et au second terminal ;
recevoir (105), respectivement par le premier terminal mobile et le second terminal, le message de réussite d'association ; et
afficher (106), respectivement par les clients s'exécutant dans le premier terminal mobile et le second terminal, le message de réussite d'association.

3. Procédé selon la revendication 1, dans lequel le critère d'association d'utilisateurs prédéfini comprend en outre le fait qu'une distance entre des localisations géographiques du premier terminal mobile et du second terminal est inférieure à un seuil de localisation prédéfini.

4. Procédé selon la revendication 1, dans lequel le client est un client de messagerie instantanée ou un client de service de réseautage social.

5. Système pour ajouter une relation d'association d'utilisateurs, comprenant un terminal (4), dans lequel un client est installé, et un serveur (6), le terminal comprenant :
un module de vérification d'opération d'activation (40), configuré pour vérifier si une opération d'activation se produit ou non ;
un module d'obtention d'informations (42), configuré pour, lorsque le module de vérification d'opération d'activation (40) détecte l'opération d'activation, obtenir des informations d'environnement courant et des informations d'utilisateur courant du terminal, les informations d'environnement courant comprenant des informations de localisation géographique du terminal et des informations d'instant courant du terminal, les informations d'instant courant du terminal étant des informations d'instant auquel l'opération d'activation se produit dans le terminal, et les informations d'utilisateur courant comprenant des informations d'un compte d'utilisateur pour se connecter sur le client s'exécutant dans le terminal ; et
un module d'envoi d'informations (44), configuré pour envoyer les informations d'environnement courant et les informations d'utilisateur courant au serveur ;
le serveur comprenant :
un module de réception d'informations (60), configuré pour recevoir les informations d'environnement courant et les informations d'instant d'utilisateur courant du terminal et recevoir des informations d'environnement courant et des informations d'utilisateur courant d'un autre terminal ;
un module de détermination d'informations (62), qui détermine si les informations d'environnement courant du terminal et les informations d'environnement courant dudit autre terminal satisfont ou non un critère d'association d'utilisateurs prédéfini, le critère d'association d'utilisateurs prédéfini comprenant le fait qu'un intervalle de temps entre l'instant où se produit l'opération d'activation dans le terminal et l'instant où se produit une opération d'activation dans ledit autre terminal est inférieur à un seuil d'intervalle prédéfini ;
un module d'ajout de relation d'association (64), configuré pour, lorsque le module de détermination d'informations (62) détermine que les informations d'environnement courant du terminal et les informations d'environnement courant dudit autre terminal satisfont le critère d'association d'utilisateurs prédéfini, ajouter une relation d'association d'utilisateurs pour des comptes d'utilisateur contenus dans les informations d'utilisateur courant des deux terminaux.

6. Système selon la revendication 5, dans lequel le terminal comprend en outre :
un module de réception d'informations d'association (41), configuré pour recevoir un message de réussite d'association envoyé par le serveur ; et
un module d'affichage d'informations d'association (43), configuré pour afficher le message de réussite d'association dans le client.

7. Système selon la revendication 5 ou 6, dans lequel le client est un client de messagerie instantanée ou un client de service de réseautage social.

8. Système selon la revendication 5, dans lequel le serveur comprend en outre :
un module d'envoi d'informations d'association (66), configuré pour envoyer un message de réussite d'association au terminal mobile.

9. Système selon la revendication 5 ou 8, dans lequel le serveur est un serveur de messagerie instantanée desservant un client de messagerie instantanée ou un serveur de service de réseautage social desservant un client de service de réseautage social.
